# EUROPÄISCHE PATENTSCHRIFT

(11) **EP 3 250 796 B1**
(45) Veröffentlichungstag und Bekanntmachung des Hinweises auf die Patenterteilung: **03.04.2019**
(21) Anmeldenummer: 15790555.5
(22) Anmeldetag: 05.11.2015
(51) Int. Cl.: F01L 13/00

(54) **VERFAHREN ZUR MONTAGE EINER NOCKENWELLE IN EINEM MODULKÖRPER**
PROCESS OF ASSEMBLING A CAMSHAFT IN A MODULE UNIT
PROCÉDÉ D'ASSEMBLAGE D'UN ARBRE À CAMES DANS UNE UNITÉ MODULAIRE

(30) Priorität: 29.01.2015 DE 102015101295
(43) Veröffentlichungstag der Anmeldung: 06.12.2017
(73) Patentinhaber: ThyssenKrupp Presta TecCenter AG, 9492 Eschen (LI); thyssenkrupp AG, 45143 Essen (DE)
(72) Erfinder: JUNGE, Volker, 38855 Wernigerode (DE); WÖHLER, Kevin, 38871 Ilsenburg (DE); DEPTA, Merlin, 31157 Sarstedt (DE); FRICKE, Michael, 38829 Harsleben (DE); ROGATSCH, Thomas, A-6800 Feldkirch (AT); CURLIC, Marko, 9486 Schaanwald (LI); HEITLING, Falk, 45136 Essen (DE)
(74) Vertreter: thyssenkrupp Intellectual Property GmbH
(86) Internationale Anmeldenummer: PCT/EP2015/075808
(87) Internationale Veröffentlichungsnummer: WO 2016/119934

(56) Entgegenhaltungen:
- WO-A1-2011/072782
- DE-A1-102004 022 849
- DE-A1-102007 016 209
- DE-A1-102007 027 979
- DE-A1-102007 037 358
- DE-A1-102011 111 580
- DE-A1-102013 006 796

## Beschreibung

Die vorliegende Erfindung betrifft ein Verfahren zur Montage einer Nockenwelle, wobei die Nockenwelle eine Grundwelle aufweist, auf der wenigstens zwei Schiebenockenstücke drehfest und axial verschiebbar aufgenommen sind, wobei die Schiebenockenstücke jeweils ein Trägerrohr aufweisen, auf welchem Nockenpakete umfassend jeweils wenigstens zwei Nockenlaufbahnen zur Ventilsteuerung aufsitzen, und wobei ein Verstellelement vorgesehen ist, das zum axialen Verschieben beider Schiebenockenstücke mit einem Aktuator in Wirkverbindung bringbar ist.

### STAND DER TECHNIK

Die DE 10 2012 105 795 A1 zeigt eine Nockenwelle mit zwei Schiebenockenstücken, die drehfest und axial verschiebbar auf einer Grundwelle aufgenommen sind. Für die drehfeste Aufnahme der Schiebenockenstücke weisen diese eine Innenverzahnung auf, die mit einer Außenlängsverzahnung auf der Grundwelle zusammenwirkt. Zwischen den beiden Schiebenockenstücken ist ein Verstellelement angeordnet, das zum axialen Verschieben beider Schiebenockenstücke mit einem Aktuator in Wirkverbindung bringbar ist. Der Aktuator weist hierfür Führungselemente auf, die mit einer Hubbewegung in zugeordnete Hubkurven eingreifen können, die außenseitig im Verstellelement eingebracht sind. Durch ein axiales Verschieben der Schiebenockenstücke können verschiedene Nockenlaufbahnen der Nockenpakete mit Abgriffselementen zusammenwirken, die zur Ventilsteuerung einer Brennkraftmachine dienen. Die Nockenlaufbahnen können unterschiedliche Konturen aufweisen, beispielsweise ist es denkbar, dass eine Nockenlaufbahn für einen großen Ventilhub und eine weitere Nockenlaufbahn für einen kleinen Ventilhub oder für einen Nullhub vorgesehen ist. Abhängig von der axialen Position der Schiebenockenstücke wird folglich die Ventilsteuerung mit unterschiedlichen Ventilhüben, jedoch auch oder alternativ mit unterschiedlichen Steuerzeiten über der Nockenwellendrehung betrieben.

Das erste gezeigte Schiebenockenstück dient zur Ventilsteuerung von Ventilen, die einem ersten Zylinder zugeordnet sind, und das weitere Schiebenockenstück dient zur Steuerung von Ventilen, die einem zweiten, benachbarten Zylinder zugeordnet sind. Auf vorteilhafte Weise können somit durch nur ein Verstellelement in Wirkverbindung mit nur einem Aktuator bereits zwei Schiebenockenstücke für die Ventilsteuerung verschiedener Zylinder angesteuert werden.

Nachteilhafterweise ergibt sich mit den Schiebenockenstücken und dem Verstellelement eine bauliche Einheit mit einer erheblichen Länge in Mittelachsenrichtung der Grundwelle. Bei einer Montage ist das Einsetzen der Nockenwelle in einen Modulkörper daher nur mit Lagerbrücken möglich, die eine geteilte und damit offene Bauweise aufweisen. Als ein Modulkörper wird im vorliegenden Sinne ein Aufnahmekörper verstanden, der beispielsweise als Haube, als Deckel oder als sonstige Einheit ausgeführt ist, der an eine Brennkraftmaschine angeordnet und insbesondere auf einen Zylinderkopf einer Brennkraftmaschine aufgesetzt wird. In diesem Aufnahmekörper ist dabei die Nockenwelle funktionsfertig eingerichtet.

Die fertig konfektionierte Nockenwelle mit den Schiebenockenstücken, dem Verstellelement und gegebenenfalls auch bereits mit der eingeführten Grundwelle werden hierfür in die Lagerbrücken im Modulkörper eingesetzt, wobei erst anschließend die Lagerbrücken durch einen Zusammenbau mit geschlossenen Lagerdurchgängen vervollständigt werden, sodass äußere Lagerschalen, die durch die Lagerbrücken gebildet werden, erst nach dem Zusammenbau die Nockenwelle vollumfänglich umschließen. In der Regel erstrecken sich dabei die Schiebenockenstücke durch die Lagerbrücken und sind in diesen gelagert, sodass die Grundwelle neben einer Führungsfunktion nur noch zur Einleitung der Drehbewegung in die Schiebenockenstücke dient. Geschlossene Lagerdurchgänge sind dabei im Sinne der vorliegenden Erfindung nicht zweigeteit, beispielsweise gebildet aus zwei Lagerschalen, die sich im montierten Zustand zu einer Lagerbohrung ergänzen. Folglich muss eine Welle zur Aufnahme in einer geschlossenen Lagerbrücke mit einer axialen Fügebewegung in die Lagerbohrung der Lagerbrücke eingeführt werden. Der Vorteil einer geschlossenen Lagerbrücke liegt dabei hingegen in einem geringeren Fertigungsaufwand.

WO 2011/072782 A1 beschreibt zwar ein Montageverfahren von Schiebenockenstücke, das geeignet ist zur Montage in einem Modulkörper mit geschlossenen Lagerbrücke jedem Schiebenockenstücke wird allerdings ein eigenes Verstellelement zugeordnet.

### OFFENBARUNG DER ERFINDUNG

Aufgabe der Erfindung ist die Weiterbildung eines Verfahrens zur Montage einer Nockenwelle mit einer Grundwelle und mit auf der Grundwelle aufgenommenen Schiebenockenstücken, wobei wenigstens zwei Schiebenockenstücke über ein Verstellelement in Axialrichtung der Grundwelle verschiebbar sein sollen, und wobei die Nockenwelle in einem Modulkörper mit geschlossenen Lagerbrücken montierbar sein soll.

Diese Aufgabe wird ausgehend von einem Verfahren zur Montage einer Nockenwelle gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Erfindungsgemäß weist das Verfahren zur Montage der Nockenwelle wenigstens die folgenden Schritte in beliebiger Reihenfolge auf: Bereitstellen eines Modulkörpers mit Lagerbrücken zur drehbaren Aufnahme der Nockenwelle, Fügen eines ersten Schiebenockenstückes in eine erste Lagerbrücke, Verbinden des ersten Schiebenockenstückes mit dem Verstellelement, Fügen eines zweiten Schiebenockenstückes in eine zweite Lagerbrücke und Verbinden des zweiten Schiebenockenstückes mit dem Verstellelement unter Ausnutzung eines axialen Verstellweges wenigstens eines der Schiebenockenstücke in den Lagerbrücken.

Die Erfindung geht von dem Gedanken aus, einen Modulkörper mit geschlossenen Lagerbrücken zu verwenden und in diese sollen die Schiebenockenstücke durch ein entsprechendes Verfahren mit einer besonderen Abfolge von Verfahrensschritten gefügt werden. Erst anschließend oder als Zwischenschritt wird an eines der Schiebenockenstücke das Verstellelement angebunden, und nachfolgend wird eine Verbindung des zweiten Schiebenockenstückes mit dem Verstellelement von einer gegenüberliegenden Seite zum ersten Schiebenockenstück vorgenommen. Im Ergebnis wird ein Verfahren zur Montage einer Nockenwelle bereitgestellt, wobei die Nockenwelle in einem Modulkörper mit geschlossenen Lagerbrücken montierbar ist, und zwei Schiebenockenstücke sind an ein Verstellelement angebunden, sodass beide Schiebenockenstücke mit dem Verstellelement axial auf der Grundwelle verschoben werden können. Das Verbinden der Schiebenockenstücke mit dem Verstellelement wird auf verschiedene Weise vorgenommen. Es ist denkbar, dass die Verbindung formschlüssig, kraftschlüssig und/oder mittels Verbindungselementen ausgebildet ist, wobei das Herstellen der Verbindung es zulassen muss, dass die Schiebenockenstücke bereits in den geschlossenen Lagerbrücken des Modulkörpers aufgenommen sind. Beispielsweise können die Trägerrohre der Schiebenockenstücke freie Endabschnitte aufweisen, und das Verbinden des ersten Schiebenockenstückes mit dem Verstellelement wird vorzugsweise durch ein Einfügen des Endabschnittes des ersten Trägerrohres in eine im Verstellelement vorhandene Aufnahme ausgeführt. Die Aufnahme im Verstellelement ist beispielsweise durch eine Durchgangsbohrung gebildet, die das Verstellelement mittig und damit in Mittelachsenrichtung durchwandert. Der freie Endabschnitt des ersten Schiebenockenstückes wird dabei in eine Teillänge der Aufnahme eingeschoben, insbesondere eingepresst. Das Verbinden des zweiten Schiebenockenstückes mit dem Verstellelement wird insbesondere durch ein Einfügen des Endabschnittes des zweiten Trägerrohres in die im Verstellelement vorhandene Aufnahme ausgeführt, wobei das Einfügen von einer entgegengesetzten Seite zum freien Endabschnitt des ersten Trägerrohres vorgenommen wird.

Die erfindungsgemäße Montagereihenfolge zur Aufnahme der Nockenwelle in einen Modulkörper mit geschlossenen Lagerbrücken ist insofern besonders vorteilhaft nutzbar, da die Schiebenocken in der in den Lagerbrücken gefügten Anordnung axial verschiebbar sind. Im Rahmen der Erfindung ist unter dem Begriff der axialen Verschiebbarkeit ein Verschieben der Schiebennocken entlang der Mittelachse zu verstehen. Somit können die Schiebenockenstücke bereits in den Lagerbrücken aufgenommen sein, und durch die axiale Verschiebbarkeit können die Endabschnitte der Trägerrohre in die gegenüberliegenden Seiten der Aufnahme im Verstellelement eingeschoben werden.

Das Herstellen der Verbindung zwischen den Schiebenockenstücken und dem Verstellelement erfolgt vorzugsweise auch auf andere Weise. Beispielsweise wird ein Hülsenelement durch die Aufnahme im Verstellelement hindurchgeführt, und das Hülsenelement wird mit aus der Aufnahme seitlich hervorstehenden Endabschnitten in zugeordnete Aufnahmen in den Schiebenockenstücken eingesetzt, insbesondere eingepresst. Alternativ ist es denkbar, dass auf dem Trägerrohr der Schiebenockenstücke aufgenommene Elemente in Axialrichtung über das Trägerrohr überstehen und damit eine innenseitige Aufnahme bilden, in die das Hülsenelement einpressbar ist. Somit ist eine weitere Möglichkeit aufgezeigt, eine kraft- und/oder kraftformschlüssige Verbindung zwischen den Schiebenockenstücken und dem Verstellelement herzustellen.

Das Einfügen der Endabschnitte in die Aufnahme des Verstellelementes erfolgt vorzugsweise unter Bildung eines Pressverbandes. Beispielsweise wird ein Längspressverband hergestellt, wobei auch die Möglichkeit besteht, einen Querpressverband herzustellen, beispielsweise durch das Aufheizen und/oder das Abkühlen eines der beiden Fügepartner. Die Aufnahme im Verstellelement wird gemäß einem vorteilhaften Ausführungsbeispiel durch eine zylindrische Bohrung gebildet, die das Verstellelement in Axialrichtung durchwandert, und die Endabschnitte der Trägerkörper können eine zylindrische Außenmantelfläche aufweisen. Vorzugsweise weisen die Endabschnitte jedoch auch eine Oberflächenprofilierung auf, die beim Einfügen in die Aufnahme des Verstellelementes wenigstens teilweise plastisch verformt werden. Mit weiterem Vorteil weist die Aufnahme eine innenseitige Rillenstruktur auf. Zusätzlich ist es denkbar, dass die Oberflächenprofilierung durch ein Rollierverfahren hergestellt ist, sodass die Oberflächenprofilierung in Umfangsrichtung umlaufende Rillen mit Tälern und Bergen aufweist, die konzentrisch nebeneinander angeordnet sind und umlaufende, parallele Ringe bilden. Die innenseitige Rillenstruktur in der Aufnahme des Verstellelementes wird dabei durch ein Hobeln oder ein Stoßen eingebracht sein, sodass die Rillenstruktur achsparallel zur Mittelachse verläuft, und wenn die freien Endabschnitte der Schiebenockenstücke in die Aufnahme eingepresst werden, bewirkt die Rillenstruktur in der Aufnahme eine plastische Verformung der Berge und Täler in der Oberflächenstrukturierung der Endabschnitte. Durch dieses Verfahren wird eine mechanisch hoch belastbare kraftformschlüssige Verbindung zwischen den Schiebenockenstücken und dem Verstellelement hergestellt.

Das Fügen der Schiebenockenstücke in den Lagerbrücken erfolgt vorzugsweise verschiedenartig. Beispielsweise ist es denkbar, dass zunächst ein erstes Nockenpaket auf ein Trägerrohr zur Bildung eines ersten Schiebenockenstückes aufgesetzt, beispielsweise aufgepresst wird. Der Verbund aus dem Trägerrohr und dem ersten Nockenpaket wird in einen geschlossenen Lagerdurchgang einer Lagerbrücke eingeführt, und zwar mit dem freien Ende des Trägerrohres, auf das noch kein zweites Nockenpaket aufgesetzt ist. Anschließend kann das zweite Nockenpaket auf das Trägerrohr aufgesetzt werden, derart, dass sich der Abschnitt des Trägerrohres, der sich durch den Lagerdurchgang der Lagerbrücke hindurch erstreckt, zwischen den Nockenpaketen befindet. Beide Nockenpakete sind somit derart auf dem Trägerrohr aufgesetzt, dass diese beabstandet zueinander an jeweils einem distalen Endbereich des Trägerrohres angeordnet sind.

Es ist denkbar, dass das Aufsetzen der Nockenpakete auf das Trägerrohr durch ein Aufpressen oder durch ein Aufschrumpfen erfolgt, sodass die Verbindung zwischen den Nockenpaketen und dem Trägerrohr einen Pressverband, beispielsweise einen Längspressverband oder einen Querpressverband, aufweist. Insbesondere können beide Schiebenockenstücke auf diese Weise in den zugeordneten Lagerbrücken angeordnet werden, wobei das Verbinden eines ersten Schiebenockenstückes mit dem Verstellelement in unterschiedlichen Zeitstadien der Montage erfolgt. Beispielsweise ist es denkbar, dass auch ein Schiebenockenstück mit einem Trägerrohr und einem ersten Nockenpaket sowie mit einem bereits angeordneten Verstellelement in einer ersten Lagerbrücke montiert werden, und anschließend kann ein zweites Schiebenockenstück mit einem Trägerrohr und einem Nockenpaket in eine zugeordnete zweite Lagerbrücke eingesetzt werden. Der besondere Vorteil des erfindungsgemäßen Verfahrens besteht unabhängig von der Montagabfolge darin, dass das finale Verbinden der beiden Schiebenockenstücke über das Verstellelement sich dadurch ausführen lässt, dass wenigstens eines der beiden Schiebenockenstücke in der Lagerbrücke axial verschoben wird, um den Pressverband mit dem Verstellelement herzustellen.

Die Endabschnitte der Trägerrohre können durch einen außenseitig aus einem Nockenpaket axial hervorstehenden Abschnitt des Trägerrohres gebildet sein, indem das Nockenpaket entsprechend weit auf das Trägerrohr aufgeschoben wird. Insbesondere wird das Nockenpaket, in axialer Richtung betrachtet, derart weit auf das Trägerrohr ausgeschoben, insbesondere aufgepresst, dass der entsprechende Endabschnitt in Axialrichtung seitlich aus dem Nockenpaket hervorsteht. Wird das zweite Nockenpaket auf das Trägerrohr aufgebracht, so kann dieses in Axialrichtung mit dem Ende des Trägerrohres abschließen, da außenseitig keine Verstellelemente mehr angeordnet werden.

Die Endabschnitte können so tief in die Aufnahme des Verstellelementes eingeführt werden, bis ein jeweiliges Nockenpaket der beiden Schiebenockenstücke seitlich an den Seitenflächen des Verstellelementes anliegt. Somit wird ein platzsparender Verbund aus den Schiebenockenstücken und dem Verstellelement geschaffen.

Vorzugsweise wird vor dem Fügen der Schiebenockenstücke an das Verstellelement die Umfangsposition der Schiebenockenstücke relativ zur Umfangsposition des Verstellelementes um eine Mittelachse der Nockenwelle auf eine für die Ventilsteuerung geforderte Position eingestellt. Die jeweilige Umfangsposition beschreibt dabei die Position der rotatorischen Ausrichtung der Schiebenockenstücke untereinander und relativ zu der rotatorischen Ausrichtung des Verstellelementes um die Mittelachse.

Für die Sicherstellung der jeweils geforderten Umfangsposition wird vorzugsweise ein Handhabungssystem verwendet, das die Schiebenockenstücke in die richtige Umfangsposition bringt und in dieser hält, um anschließend mit einem entsprechenden Pressverfahren die Schiebenockenstücke und das Verstellelement axial zu verpressen. Nach dem Einführen der Endabschnitte des ersten Trägerrohres und des zweiten Trägerrohres in die Aufnahme im Verstellelement wird die Grundwelle schließlich noch durch die Trägerrohre hindurchgeführt. Beispielsweise können auf einer Grundwelle zwei Verbände mit je zwei Schiebenockenstücken und einem Verstellelement aufgenommen werden, sodass die Nockenwelle für die Ventilsteuerung von vier Zylindern ausgelegt ist, wobei jedem Zylinder zwei Ventile zugeordnet sind, und die Nockenwelle weist lediglich zwei Verstellelemente auf, die für vier Zylinder der Brennkraftmaschine auch nur zwei Aktuatoren notwendig werden lassen.

### AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Ansicht eines Modulkörpers mit zwei Lagerbrücken, und in eine erste Lagerbrücke ist ein erstes Trägerrohr mit einem ersten Nockenpaket eingesetzt,
- Fig. 2: die Ansicht des Modulkörpers mit dem Trägerrohr, einem ersten Nockenpaket und einem zweiten Nockenpaket,
- Fig. 3: eine Ansicht des Modulkörpers mit dem ersten Schiebenockenstück, an das ein Verstellelement angeordnet ist,
- Fig. 4: die Ansicht des Modulkörpers mit dem ersten Schiebenockenstück gemäß Figur 3, wobei zur Bildung eines zweiten Schiebenockenstückes ein zweites Trägerrohr mit einem Nockenpaket in einer zweiten Lagerbrücke eingesetzt ist,
- Fig. 5: die Ansicht des Modulkörpers gemäß Figur 4, wobei das zweite Schiebenockenstück das Trägerrohr, ein erstes und ein zweites Nockenpaket umfasst und
- Fig. 6: die Nockenwelle in einer im Modulkörper montierten Anordnung, wobei beide Schiebenockenstücke mit dem Verstellelement verbunden sind und wobei eine Grundwelle durch die Schiebenockenstücke hindurchgeführt ist.

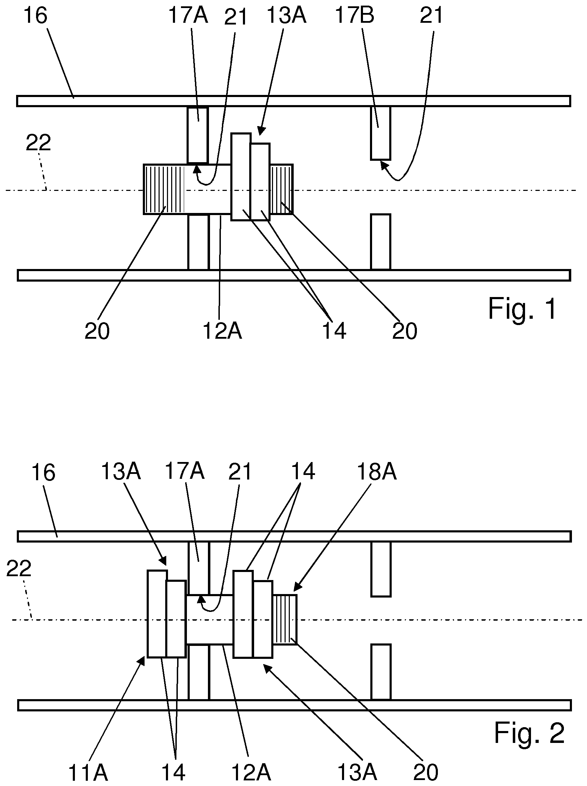

Die Figuren 1 bis 6 zeigen das erfindungsgemäße Verfahren zur Montage einer Nockenwelle 1 in einem Modulkörper 16 in verschiedenen Schritten der Montage, die aufeinander folgen können, jedoch beschränkt sich das erfindungsgemäße Verfahren nicht zwingend auf die aufgezeigte Abfolge der Verfahrensschritte und diese können auch in einer von der Darstellung abweichenden Abfolge vorgenommen werden, um das Verfahren zur Montage einer Nockenwelle 1 in einem Modulkörper 16 erfindungsgemäß vorzunehmen.

Figur 1 zeigt zur Darstellung eines ersten Verfahrensschrittes einen Modulkörper 16 in einer schematisierten Ansicht, und der Modulkörper 16 weist eine erste Lagerbrücke 17A und eine zweite Lagerbrücke 17B, und der Modulkörper 16 kann eine Modulhaube oder einen Zylinderkopf bilden und es können auch mehr als zwei Lagerbrücken 17A und 17B vorgesehen sein, die weitere Schiebenockenstücke 11A, 11B auf einer Grundwelle 10 aufnimmt.

In der Lagerbrücke 17A ist ein Trägerrohr 12A eingesetzt, auf dem bereits ein Nockenpaket 13A aufgebracht ist. Das Nockenpaket 13A weist Nockenlaufbahnen 14 zur hubvariablen Ventilsteuerung auf. Gemäß einer ersten Variante wird zunächst das Trägerrohr 12A in den geschlossenen Lagerdurchgang 21 der ersten Lagerbrücke 17A eingeführt, und anschließend wird das erste Nockenpaket 13A auf das Trägerrohr 12A aufgeschoben. Gemäß einer zweiten Variante wird das Nockenpaket 13A bereits außerhalb des Modulkörpers 16 auf das Trägerrohr 12A aufgebracht, und anschließend werden der Verbund aus dem Trägerrohr 12A und dem ersten Nockenpaket 13A durch den Lagerdurchgang 21 der ersten Lagerbrücke 17A hindurchgeführt.

Das Trägerrohr 12A weist eine Oberflächenprofilierung 20 auf, auf die, wie in Figur 2 dargestellt, ein zweites, rechts dargestelltes Nockenpaket 13A aufgebracht ist, insbesondere unter Bildung eines Pressverbandes. Die Oberflächenprofilierung 20 weist auf nicht näher dargestellte Weise eine Rollierung auf, und in den Durchgängen in den Nockenpaketen 13A können Rillenstrukturen eingebracht sein, sodass eine besonders belastbare Pressverbindung herstellbar ist. Ein freies Stück des Trägerrohres 12A erstreckt sich dabei zwischen den beiden Nockenpaketen 13A und über dieses freie Stück ist das Schiebenockenstück 11A in der Lagerbrücke 17A verliersicher aufgenommen und wird lediglich über einen Verschiebeweg entlang der Mittelachse 22 verschoben.

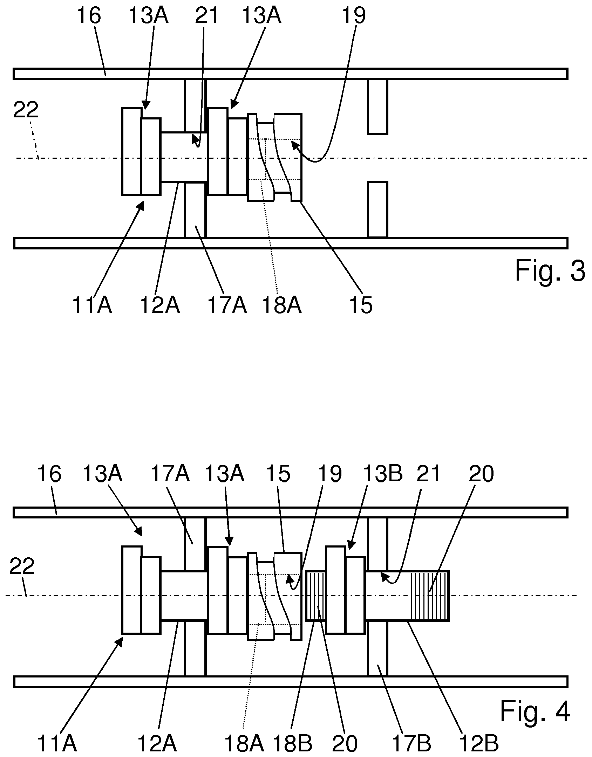

Figur 3 zeigt einen weiteren Schritt des erfindungsgemäßen Verfahrens, nach dem ein Verstellelement 15 bereitgestellt wurde, das auf einen freien Endabschnitt 18A des Trägerrohres 12A aufgesetzt wurde, wie in Figur 2 gezeigt. Der freie Endabschnitt 18A weist ebenfalls eine Oberflächenprofilierung 20 auf, siehe hierfür Figur 2, die bei einem Aufsetzen des Verstellelementes 15 eine leichte plastische Formänderung erfährt.

Im Verstellelement 15 ist eine Aufnahme 19 in Form einer Durchgangsbohrung eingebracht, und der erste Endabschnitt 18A des Trägerrohres 12A erstreckt sich über einen Abschnitt in die Aufnahme 19 hinein.

Ausgehend von der fertigen Anordnung des Schiebenockenstückes 11A in der ersten Lagerbrücke 17A und mit dem angesetzten Verstellelement 15 an das erste Schiebenockenstück 11A wird, wie in Figur 4 gezeigt, das zweite Trägerrohr 12B in den Lagerdurchgang 21 der zweiten Lagerbrücke 17B hindurchgeführt, und ein Nockenpaket 13B sitzt beispielhaft auf dem Trägerrohr 12B auf. Das zweite Trägerrohr 12B besitzt ebenfalls beispielhaft Oberflächenprofilierungen 20 zur Aufnahme des weiteren Nockenpaketes 13B und zur Bildung eines oberflächenstrukturierten Endabschnittes 18B.

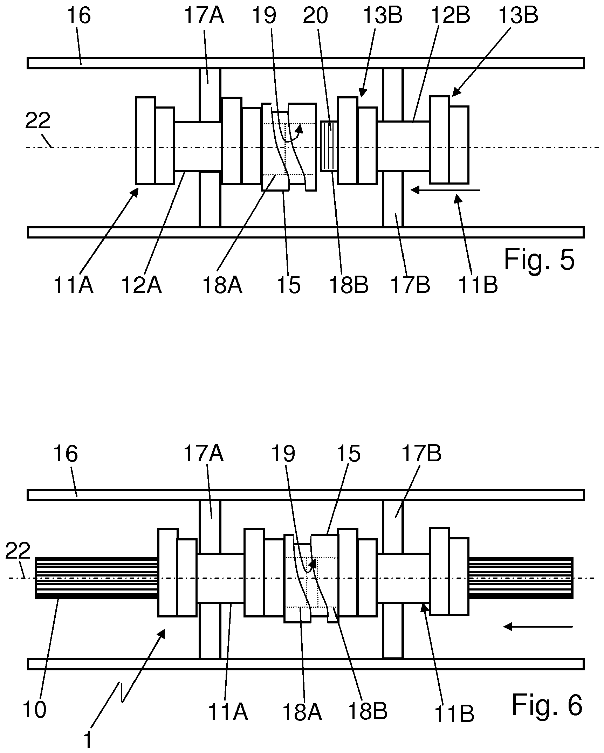

Figur 5 zeigt das zweite Schiebenockenstück 11B in vervollständigter Anordnung, sodass zwei Nockenpakete 13B auf dem Trägerrohr 12B aufgesetzt sind, wobei sich zwischen den beiden Nockenpaketen 13B die Lagerbrücke 17B zur Aufnahme des Schiebenockenstückes 11B befindet. Gezeigt ist ein weiterer freier Endabschnitt 18B des zweiten Schiebenockenstückes 11B, und auch der zweite Endabschnitt 18B weist beispielhaft eine Oberflächenprofilierung 20 auf, mit der der zweite Endabschnitt 18B von einer zum ersten Endabschnitt 18A entgegengesetzten Seite in die Aufnahme 19 des Verstellelementes 15 eingepresst wird, wie dies mit einem Pfeil angedeutet ist.

Wie Figur 6 zeigt, ist nach einem Einsetzen des Endabschnittes 18B in die Aufnahme 19 des Verstellelementes 15 ein Verbund aus zwei Schiebenockenstücken 11A und 11B mit einem gemeinsamen Verstellelement 15 gebildet, wobei jedes der beiden Schiebenockenstücke 11A und 11B in einer zugeordneten Lagerbrücke 17A und 17B drehbar aufgenommen sind. Schließlich zeigt Figur 6 noch eine Grundwelle 10 zur Vervollständigung der Nockenwelle 1 in Anordnung im Modulkörper 16, und die Grundwelle 10 wird, wie der dargestellte Pfeil zeigt, in Mittelachsenrichtung der Mittelachse 22 durch die Schiebenockenstücke 11A und 11B hindurchgeführt.

Im Ergebnis ergibt sich ein vorteilhaft ausführbares Montageverfahren zur Anordnung einer Nockenwelle 1 in geschlossene Lagerbrücken 17A und 17B eines Modulkörpers 16, wobei die Schiebenockenstücke 11A und 11B jeweils zwei außenseitige Nockenpakete 13A und 13B aufweisen, und die Lagerdurchgänge 21 befinden sich zwischen den beiden Nockenpaketen 13A und 13B mit den zugeordneten Nockenlaufbahnen 14.

Es denkbar, dass das erfindungsgemäße Verfahren ausgeführt wird unter Bildung von kraftformschlüssigen Pressverbänden durch eine Oberflächenprofilierung 20 auf dem Trägerrohr 12A und 12B, wobei durch die Oberflächenprofilierungen 20 sowohl die Nockenpakete 13A und 13B auf den Trägerrohren 12A und 12B im kraftformschlüssigen Pressverband gehalten als auch die Verbindungen der Trägerrohre 12A und 12B mit dem Verstellelement 15 im kraftformschlüssigen hergestellt werden. Dadurch ergeben sich mechanisch hoch belastbare Verbindungen, sodass weitere insbesondere stoffschlüssige Fügeverfahren wie Schweiß- oder Lötverfahren oder Verbindungselemente wie Schrauben oder dergleichen nicht notwendig sind.

Die Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Nockenwelle
- 10: Grundwelle
- 11A: Schiebenockenstück
- 11B: Schiebenockenstück
- 12A: Trägerrohr
- 12B: Trägerrohr
- 13A: Nockenpaket
- 13B: Nockenpaket
- 14: Nockenlaufbahn
- 15: Verstellelement
- 16: Modulkörper
- 17A: Lagerbrücke
- 17B: Lagerbrücke
- 18A: Endabschnitt
- 18B: Endabschnitt
- 19: Aufnahme
- 20: Oberflächenprofilierung
- 21: Lagerdurchgang
- 22: Mittelachse

## Patentansprüche

1. Verfahren zur Montage einer Nockenwelle (1), wobei die Nockenwelle (1) eine Grundwelle (10) aufweist, auf der wenigstens zwei Schiebenockenstücke (11A, 11B) drehfest und axial verschiebbar aufgenommen sind, wobei die Schiebenockenstücke (11A, 11B) jeweils ein Trägerrohr (12A, 12B) aufweisen, auf welchem Nockenpakete (13A, 13B) umfassend jeweils wenigstens zwei Nockenlaufbahnen (14) zur Ventilsteuerung aufsitzen, und wobei ein Verstellelement (15) vorgesehen ist, das zum axialen Verschieben beider Schiebenockenstücke (11A, 11B) mit einem Aktuator in Wirkverbindung bringbar ist, wobei das Verfahren wenigstens die folgenden Schritte in beliebiger Reihenfolge aufweist:
- Bereitstellen eines Modulkörpers (16) mit Lagerbrücken (17A, 17B) zur drehbaren Aufnahme der Nockenwelle (1),
- Fügen eines ersten Schiebenockenstückes (11A) in eine erste Lagerbrücke (17A),
- Verbinden des ersten Schiebenockenstückes (11A) mit dem Verstellelement (15),
- Fügen eines zweiten Schiebenockenstückes (11B) in eine zweite Lagerbrücke (17B) und
- Verbinden des zweiten Schiebenockenstückes (11B) mit dem Verstellelement (15) unter Ausnutzung eines axialen Verstellweges wenigstens eines der Schiebenockenstücke (11A, 11B) in den Lagerbrücken (17A, 17B).

2. Verfahren nach Anspruch 1, **dadurch gekennzeichnet, dass** die Trägerrohre (12A, 12B) freie Endabschnitte (18A, 18B) aufweisen, wobei das Verbinden des ersten Schiebenockenstückes (11A) mit dem Verstellelement (15) durch ein Einfügen des Endabschnittes (18A) des ersten Trägerrohres (12A) in eine im Verstellelement (15) vorhandene Aufnahme (19) ausgeführt wird.

3. Verfahren nach Anspruch 1 oder 2, **dadurch gekennzeichnet, dass** das Verbinden des zweiten Schiebenockenstückes (11B) mit dem Verstellelement (15) durch ein Einfügen des Endabschnittes (18B) des zweiten Trägerrohres (12A) in die im Verstellelement (15) vorhandene Aufnahme (19) von einer zum ersten Endabschnitt (18A) entgegengesetzten Seite ausgeführt wird.

4. Verfahren nach einem der Ansprüche 1 bis 3, **dadurch gekennzeichnet, dass** das Einfügen der Endabschnitte (18A, 18B) in die Aufnahme (19) des Verstellelementes (15) unter Bildung eines Pressverbandes erfolgt.

5. Verfahren nach einem der vorgenannten Ansprüche, **dadurch gekennzeichnet, dass** die Endabschnitte (18A, 18B) eine Oberflächenprofilierung (20) aufweisen, die beim Einfügen in die Aufnahme (19) des Verstellelementes (15) wenigstens teilweise plastisch verformt wird.

6. Verfahren nach einem der vorgenannten Ansprüche, **dadurch gekennzeichnet, dass** das Fügen der Schiebenockenstücke (11A, 11B) in die Lagerbrücken (17A, 17B) wenigstens die folgenden Schritte in beliebiger Reihenfolge umfasst:
- Aufsetzen eines ersten Nockenpaketes (13A, 13B) auf das Trägerrohr (12A, 12B),
- Einführen des Trägerrohres (12A, 12B) mit dem ersten Nockenpaket (13A, 13B) in einen geschlossenen Lagerdurchgang (21) der Lagerbrücke (17A, 17B),
- Aufsetzen eines zweiten Nockenpaketes (13A, 13B) auf das Trägerrohr (12A, 12B), derart, dass sich der Abschnitt des Trägerrohres (12A, 12B), der sich durch den Lagerdurchgang (21) der Lagerbrücke (17A, 17B) hindurch erstreckt, zwischen den Nockenpaketen (13A, 13B) befindet.

7. Verfahren nach einem der vorgenannten Ansprüche 2 bis 6, **dadurch gekennzeichnet, dass** die Endabschnitte (18A, 18B) der Trägerrohre (12A, 12B) durch einen außenseitig aus einem Nockenpaket (13A, 13B) hervorstehenden Abschnitt des Trägerrohres (12A, 12B) gebildet wird, indem das Nockenpaket (13A, 13B) entsprechend weit auf das Trägerrohr (12A, 12B) aufgeschoben wird.

8. Verfahren nach einem der vorgenannten Ansprüche 2 bis 7, **dadurch gekennzeichnet, dass** die Endabschnitte (18A, 18B) so tief in die Aufnahme des Verstellelementes eingeführt werden, bis ein jeweiliges Nockenpaket (13A, 13B) der beiden Schiebenockenstücke (11A, 11B) seitlich an den Seitenflächen des Verstellelementes (15) anliegt.

9. Verfahren nach einem der vorgenannten Ansprüche, **dadurch gekennzeichnet, dass** vor dem Fügen der Schiebenockenstücke (11A, 11B) an das Verstellelement (15) die Umfangsposition der Schiebenockenstücke (11A, 11B) relativ zur Umfangsposition des Verstellelementes (15) um eine Mittelachse (22) der Nockenwelle (1) auf eine für die Ventilsteuerung geforderte Position eingestellt wird.

10. Verfahren nach einem der vorgenannten Ansprüche 2 bis 9, **dadurch gekennzeichnet, dass** nach dem Einführen der Endabschnitte (18A, 18B) des ersten Trägerrohres (12A) und des zweiten Trägerrohres (12B) in die Aufnahme (19) im Verstellelement (15) die Grundwelle (10) durch die Trägerrohre (12A, 12B) geführt wird.

## Claims

1. Method for installing a camshaft (1), wherein the camshaft (1) comprises a main shaft (10), on which at least two sliding cam pieces (11A, 11B) are accommodated in a rotationally fixed and axially displaceable manner, wherein the sliding cam pieces (11A, 11B) each comprise a carrier tube (12A, 12B), on which are seated cam groups (13A, 13B) each comprising at least two cam tracks (14) for valve-control purposes, and wherein an adjustment element (15) is provided and, for the axial displacement of the two sliding cam pieces (11A, 11B), can be brought into operative connection with an actuator, wherein the method comprises at least the following steps in any desired order:
- supplying a module body (16) which has bearing bridges (17A, 17B) for accommodating the camshaft (1) in a rotatable manner,
- inserting a first sliding cam piece (11A) into a first bearing bridge (17A),
- connecting the first sliding cam piece (11A) to the adjustment element (15),
- inserting a second sliding cam piece (11B) into a second bearing bridge (17B), and
- connecting the second sliding cam piece (11B) to the adjustment element (15), making use in the process of an axial adjustment distance of at least one of the sliding cam pieces (11A, 11B) in the bearing bridges (17A, 17B).

2. Method according to Claim 1, **characterized in that** the carrier tubes (12A, 12B) comprise free end portions (18A, 18B), wherein the operation of connecting the first sliding cam piece (11A) to the adjustment element (15) is executed by virtue of the end portion (18A) of the first carrier tube (12A) being inserted into a mount (19) present in the adjustment element (15).

3. Method according to Claim 1 or 2, **characterized in that** the operation of connecting the second sliding cam piece (11B) to the adjustment element (15) is executed by virtue of the end portion (18B) of the second carrier tube (12A) being inserted into the mount (19), which is present in the adjustment element (15), from a side opposite to the first end portion (18A).

4. Method according to one of Claims 1 to 3, **characterized in that** the end portions (18A, 18B) are inserted into the mount (19) of the adjustment element (15) to form a press-fit arrangement.

5. Method according to one of the preceding claims, **characterized in that** the end portions (18A, 18B) comprise a surface profiling (20) which is plastically deformed, at least in part, when inserted into the mount (19) of the adjustment element (15).

6. Method according to one of the preceding claims, **characterized in that** the operation of inserting the sliding cam pieces (11A, 11B) into the bearing bridges (17A, 17B) comprises at least the following steps in any desired order:
- positioning a first cam group (13A, 13B) on the carrier tube (12A, 12B),
- introducing the carrier tube (12A, 12B), by way of the first cam group (13A, 13B), into a closed bearing passage (21) of the bearing bridge (17A, 17B),
- positioning a second cam group (13A, 13B) on the carrier tube (12A, 12B) such that that portion of the carrier tube (12A, 12B) which extends through the bearing passage (21) of the bearing bridge (17A, 17B) is located between the cam groups (13A, 13B).

7. Method according to one of preceding Claims 2 to 6, **characterized in that** the end portions (18A, 18B) of the carrier tubes (12A, 12B) are formed by a portion of the carrier tube (12A, 12B) which projects from a cam group (13A, 13B) on the outside, the cam group (13A, 13B) being pushed to a correspondingly pronounced extent onto the carrier tube (12A, 12B).

8. Method according to one of preceding Claims 2 to 7, **characterized in that** the end portions (18A, 18B) are introduced into the mount of the adjustment element until a respective cam group (13A, 13B) of the two sliding cam pieces (11A, 11B) lies laterally against the side surfaces of the adjustment element (15).

9. Method according to one of the preceding claims, **characterized in that**, prior to the sliding cam pieces (11A, 11B) being joined onto the adjustment element (15), adjustment takes place of the circumferential position of the sliding cam pieces (11A, 11B) relative to the circumferential position of the adjustment element (15) about a center axis (22) of the camshaft (1) to a position which is required for valve-control purposes.

10. Method according to one of preceding Claims 2 to 9, **characterized in that**, once the end portions (18A, 18B) of the first carrier tube (12A) and of the second carrier tube (12B) have been introduced into the mount (19) in the adjustment element (15), the main shaft (10) is guided through the carrier tubes (12A, 12B).

## Revendications

1. Procédé de montage d'un arbre à cames (1), l'arbre à cames (1) comprenant un arbre de base (10) sur lequel sont logées de manière solidaire en rotation et de manière déplaçable axialement au moins deux pièces cames coulissantes (11A, 11B), les pièces cames coulissantes (11A, 11B) comprenant respectivement un tube de support (12A, 12B) sur lequel reposent des groupes de cames (13A, 13B) comportant respectivement au moins deux pistes de came (14) pour la commande de soupapes, et un élément de réglage (15) étant prévu , lequel peut être amené en liaison fonctionnelle avec un actionneur pour déplacer axialement les deux pièces cames coulissantes (11A, 11B), le procédé comprenant au moins les étapes suivantes dans un ordre quelconque :
- fournir un corps modulaire (16) doté de consoles de palier (17A, 17B) destinées à loger l'arbre à cames (1) de manière rotative,
- assembler une première pièce came coulissante (11A) dans une première console de palier (17A),
- relier la première pièce came coulissante (11A) à l'élément de réglage (15),
- assembler une deuxième pièce came coulissante (11B) dans une deuxième console de palier (17B) et
- relier la deuxième pièce came coulissante (11B) à l'élément de réglage (15) en utilisant une course de réglage axiale d'au moins l'une des pièces cames coulissantes (11A, 11B) dans les consoles de palier (17A, 17B).

2. Procédé selon la revendication 1, **caractérisé en ce que** les tubes de support (12A, 12B) comprennent des parties d'extrémité libres (18A, 18B), la liaison de la première pièce came coulissante (11A) à l'élément de réglage (15) étant réalisée par une insertion de la partie d'extrémité (18A) du premier tube de support (12A) dans un logement (19) présent dans l'élément de réglage (15).

3. Procédé selon la revendication 1 ou 2, **caractérisé en ce que** la liaison de la deuxième pièce came coulissante (11B) à l'élément de réglage (15) est réalisée par une insertion de la partie d'extrémité (18B) du deuxième tube de support (12A) dans le logement (19) présent dans l'élément de réglage (15) depuis un côté opposé à la première partie d'extrémité (18A).

4. Procédé selon l'une quelconque des revendications 1 à 3, **caractérisé en ce que** l'insertion des parties d'extrémité (18A, 18B) dans le logement (19) de l'élément de réglage (15) s'effectue en formant un ensemble à montage serré.

5. Procédé selon l'une quelconque des revendications précédentes, **caractérisé en ce que** les parties d'extrémité (18A, 18B) comprennent un profilage de surface (20) qui est déformé plastiquement au moins partiellement lors de l'insertion dans le logement (19) de l'élément de réglage (15).

6. Procédé selon l'une quelconque des revendications précédentes, **caractérisé en ce que** l'assemblage des pièces cames coulissantes (11A, 11B) dans les consoles de palier (17A, 17B) comporte au moins les étapes suivantes dans un ordre quelconque :
- placer un premier groupe de cames (13A, 13B) sur le tube de support (12A, 12B),
- introduire le tube de support (12A, 12B) doté du premier groupe de cames (13A, 13B) dans un passage de palier fermé (21) de la console de palier (17A, 17B),
- placer un deuxième groupe de cames (13A, 13B) sur le tube de support (12A, 12B), de telle sorte que la partie du tube de support (12A, 12B) qui s'étend à travers le passage de palier (21) de la console de palier (17A, 17B) se trouve entre les groupes de cames (13A, 13B).

7. Procédé selon l'une quelconque des revendications précédentes 2 à 6, **caractérisé en ce que** les parties d'extrémité (18A, 18B) des tubes de support (12A, 12B) sont formées par une partie du tube de support (12A, 12B) faisant saillie, du côté extérieur, à partir d'un groupe de cames (13A, 13B), du fait que le groupe de cames (13A, 13B) est enfilé sur une distance correspondante sur le tube de support (12A, 12B).

8. Procédé selon l'une quelconque des revendications précédentes 2 à 7, **caractérisé en ce que** les parties d'extrémité (18A, 18B) sont introduites suffisamment profondément dans le logement de l'élément de réglage pour qu'un groupe de cames (13A, 13B) respectif des deux pièces cames coulissantes (11A, 11B) s'appuie latéralement contre les surfaces latérales de l'élément de réglage (15).

9. Procédé selon l'une quelconque des revendications précédentes, **caractérisé en ce qu'**avant l'assemblage des pièces cames coulissantes (11A, 11B) à l'élément de réglage (15), la position périphérique des pièces cames coulissantes (11A, 11B) par rapport à la position périphérique de l'élément de réglage (15) autour d'un axe central (22) de l'arbre à cames (1) est réglée à une position requise pour la commande de soupapes.

10. Procédé selon l'une quelconque des revendications précédentes 2 à 9, **caractérisé en ce qu'**après l'insertion des parties d'extrémité (18A, 18B) du premier tube de support (12A) et du deuxième tube de support (12B) dans le logement (19) dans l'élément de réglage (15), l'arbre de base (10) est guidé à travers les tubes de support (12A, 12B) .
